Europäisches Patentamt

European Patent Office

Office européen des brevets

(19)

(11) Veröffentlichungsnummer: **0 055 455**
**B1**

# (12) EUROPÄISCHE PATENTSCHRIFT

(45) Veröffentlichungstag der Patentschrift:
01.04.87

(21) Anmeldenummer: **81110668.1**

(22) Anmeldetag: **21.12.81**

(51) Int. Cl.⁴: **G 09 B 25/02**

(54) **Experimentiervorrichtung.**

(30) Priorität: **31.12.80 DE 3049585**
**25.11.81 DE 3146763**

(43) Veröffentlichungstag der Anmeldung:
**07.07.82 Patentblatt 82/27**

(45) Bekanntmachung des Hinweises auf die Patenterteilung:
**01.04.87 Patentblatt 87/14**

(84) Benannte Vertragsstaaten:
**DE FR GB IT**

(56) Entgegenhaltungen:
**DE - U - 7 439 758**
**FR - A - 2 397 172**
**US - A - 3 934 356**
**US - A - 4 068 391**

(73) Patentinhaber: **Siemens Aktiengesellschaft Berlin und München, Wittelsbacherplatz 2, D-8000 München 2 (DE)**

(72) Erfinder: **Ussmüller, Helmut, Dipl.-Ing., Tulpenweg 248, D-8521 Dormitz (DE)**
Erfinder: **Breidenbach, Karl, Mainstrasse 5, D-6234 Hattersheim 3 (DE)**
Erfinder: **Malhöfner, Dieter, Halevistrasse 4, D-8510 Fürth (DE)**

## Beschreibung

Die Erfindung bezieht sich auf eine Experimentiervorrichtung zur Demonstration und Durchführung von kälte- und/oder klimatechnischen Versuchen gemäss dem Oberbegriff des Anspruches 1.

Der Bedarf an auf dem Gebiet der Kältetechnik ebenso wie dem der Schulungstechnik ausgebildeten Fachkräften wird nicht nur im Zuge der Energieverknappung ständig grösser. Entsprechend wächst nicht nur im Inland etwa auf Berufs- oder Berufsfachschulen, sondern auch an technischen Fakultäten ausländischer Hochschulen, und zwar insbesondere der heissen Wüstenzonen des subtropischen und/oder tropischen Gürtels der Erde, der Bedarf an Demonstrations- und Schulungsmöglichkeiten. Diese müssen jedoch zu preisgünstigen Bedingungen zur Verfügung stehen und eine besondere Universalität im Hinblick auf die Möglichkeit der Durchführung vielfältigster Versuche bei geringsmöglichem material- und/oder aggregatemässigem und/oder instrumentalem Aufwand bieten.

Herkömmlich pflegen Laboratoriumsschulungen in extrem kleinen Gruppen an festinstallierten Experimentierplätzen durchgeführt zu werden, welche für jeweils einen oder allenfalls wenige weitere kältetechnische bzw. klimatechnische Versuche dadurch ausgelegt sind, dass die für diesen Versuch bzw. diese Versuche erforderlichen Aggregate, Messgeräte, Anzeigeinstrumente und Stellglieder, wie beispielsweise Ventile, in fester Zuordnung zueinander eingebaut bzw. festgelegt sind.

Beispielsweise ist aus der US-A-3 934 356 ein Lehrmittel für die Wartung und Reparatur von Heiz- und Klimageräten bekannt, bei dem in einem isolierten Koffer der Luftverteilungsteil eines Heiz- und Klimasystems angeordnet ist. Der Apparat enthält ein komplettes miniaturisiertes Kälteaggregat, das aus einer gekapselten Kompressoreinheit, einem Verdampfer, einem Kondensator und den Leitungen besteht, die die einzelnen Teile miteinander verbinden. Der Kondensator und Kompressor sind als Einheit auf einer aus dem Koffer ausschiebbaren Grundplatte angeordnet. In der herausgeschobenen Lage kann diese Einheit über Leitungen mit der in dem Koffer verbleibenden Verdunster-Einheit verbunden werden, die aus einem Gebläse mit Elektromotor, dem Luftführungskanal, dem eigentlichen Verdampfer und einem Thermostat besteht. Ein mit diesem bekannten Gerät ausgerüsteter Experimentierplatz gestattet die Vorführung eines Klimagerätes lediglich in einem fest vorgegebenen Versuchsaufbau. Für andere Versuche ist dann jeweils ein anderer Experimentierplatz ähnlicher Ausgestaltung jedoch anderer angepasster aggregatemässiger bzw. instrumenteller Bestückung vorzusehen. Ähnliches gilt für das aus der DE-U-7 439 758 bekannte Demonstrationsobjekt, bei dem durch starre Leitungen miteinander verbundene Arbeitsgeräte mit Messgeräten und Ventilen innerhalb eines aus Vertikal- und Horizontalstreben aufgebauten Rahmengestells angeordnet sind.

Aus der US-A-4 068 391 ist ferner ein Demonstrationsgerät für die Simulation einer Wärmepumpe bekannt, bei dem eine Tafel mit zwei Leuchtschaltbildern vorgesehen ist, von denen das eine durch Leuchtsymbole und leuchtende Verbindungslinien schematisch den hydraulischen und das andere Leuchtschaltbild schematisch den elektrischen Teil einer Wärmepumpenanlage zeigt. Bei dieser Ausführung sind die Verbindungen der auf dem Leuchtschaltbild dargestellten Symbole fest vorgegeben und können nicht abgewandelt werden.

Diese bekannten Arten von Experimentierplätzen für die Durchführung von Versuchen zur Demonstrations- und/oder Schulungszwecken haben verschiedene Nachteile:

Einerseits ist ein nicht unbeträchtlicher apparativer Aufwand mit den entsprechenden Kosten nicht nur für die Anschaffung bzw. Ausrüstung einer solchen für die Durchführung aller erforderlichen Versuche auf dem Gebiet der Kältetechnik bzw. der Klimatechnik benötigten Experimentierplätze, sondern auch für deren Wartung und Unterhaltung hinzunehmen, welche in den meisten Fällen den Etat der als Träger solcher Demonstrations- und/oder Schulungsveranstaltungen in Frage kommenden Institutionen zu übersteigen pflegen. Andererseits aber gestattet diese Vielzahl solcher für vorbestimmte Versuche konzipierter und entsprechend fest installierter Experimentierplätze zwar die gleichzeitige Durchführung entsprechender Demonstrations- und/oder Schulungsversuche mit parallel arbeitenden kleinen Personengruppen, pflegt jedoch für die Durchführung solcher Versuche mit Personengruppen mittlerer Stärke ungeeignet zu sein. Dies hat seinen Grund nicht nur darin, dass der Aufwand für diese Vielzahl fest installierter Experimentierplätze sich allenfalls für eine grössere Zahl von Versuchsteilnehmern rechtfertigen kann, welche in Gruppen geringster Teilnehmerstärke zirkulierend die einzelnen Versuche im Parallelbetrieb zueinander durchführen, wohingegen ein solcher Aufwand für Teilnehmergruppen geringerer Personenzahl praktisch nicht mehr zu vertreten ist, sondern auch darin, dass wegen der Festinstallation und -ausrüstung solcher Experimentierplätze eine ausreichende Übersichtlichkeit derselben bereits für Teilnehmergruppen mittlerer Personenzahl nicht mehr gewährleistet ist.

Beispielsweise in Forschungslaboratorien ist es ferner auch bereits bekannt, die einzelnen Aggregate, Apparate, Instrumente und dergleichen einzeln zur Verfügung zu halten und je nach durchzuführender Forschungsaufgabe zu einer entsprechenden Versuchsapparatur zusammenzustellen. Dabei sind durch die FR-A1-2 397 172 aus senkrechten und waagrechten Metallprofilstäben gebildete Aufbauten bekannt, in deren Rasterhohlräume Regale, Wandschränke, elektrische Schalttafeln, zu Bündeln zusammengefasste Rohre für Flüssigkeiten, elektrische Leitungen und Geräte eingesetzt und befestigt sind. Die Geräte, wie Druckmesser, elektronische Regler und dergleichen sind auf der Rückseite von Tragplatinen unterschiedlicher Grösse angeordnet, die kleiner sind als die Öffnungen der Rasterhohlräume. Um sie dennoch in die Rasterhohlräume einsetzen zu können, werden die Rasterhohlräume durch senkrechte Befestigungsschienen überbrückt und die Tragplatinen mit den rückseitig angeordneten Geräten an den senkrechten Befestigungsschienen angebracht. Diese Art des Aufbaues von Apparaturen eignet sich jedoch nicht für eine flexible und übersichtliche Durchführung von Versuchen zu Demonstrations- und Schulungszwecken, um einem gleichzeitig beteiligten grösseren Personenkreis kälte- bzw. klimatechnische Geräte und Bauelemente und deren Verbindungen untereinander gut wahrnehmbar vorzuführen.

Der Erfindung liegt die Aufgabe zugrunde, eine Möglichkeit zu schaffen, mit einfachen und kostengünstigen Mitteln sowohl kältetechnische als auch klimatechnische Versuche nicht nur einem beliebig grossen Personenkreis gleichzeitig übersichtlich und von allen gut wahrnehmbar zu demonstrieren, sondern solche Versuche auch von einer beliebig grossen Teilnehmerzahl mit entsprechender Übersicht für alle Teilnehmer ohne grossen Zeitaufwand durchführen lassen zu können, d.h. dass ein Versuch rasch aufgebaut und schnell geändert werden kann, was zur Demonstration von Experimenten von ausschlaggebender Bedeutung ist.

Die Lösung dieser Aufgabe gelingt gemäss der Erfindung in einfacher und wirtschaftlicher Weise durch die im Kennzeichen des Anspruchs 1 angegebenen Merkmale.

Durch die Erfindung wird es ermöglicht, in übersichtlicher Weise Versuchsaufbauten für beliebige Versuchsprogramme auf dem Gebiet sowohl der Kältetechnik als auch der Klimatechnik an nur einem einzigen Experimentierplatz mit dementsprechend geringem Raumbedarf desselben schnell und bequem so aufzubauen, dass die entsprechenden Versuche einer beliebig grossen oder kleinen Zahl von Beobachtern übersichtlich vorgeführt werden und diese oder entsprechende Schulungs-Lehrgangsteilnehmer, wie beispielsweise ganze Berufs- oder Berufsfachschulklassen, gleichzeitig an der Durchführung eines jeden Versuchs beteiligt werden können. Dadurch dass die Tragplatine so ausgebildet ist, dass sie am Tragrahmen oder an der horizontalen Strebe festlegbar ist, überdeckt sie den gesamten Rasterhohlraum, so dass die Übersichtlichkeit gegenüber der bekannten Ausführung erhöht ist. Ferner sind zur Befestigung zusätzliche senkrechte Schienen nicht erforderlich. Daher wird ein schnelleres und bequemeres Einsetzen der Platine ermöglicht. Während bei bekannten Ausführungen mit im Tragrahmen fest installierten Rohren und festen Verschraubungen der Zu- und Ableitungen an den Geräten jeweils umfangreiche Umbauten und Nachinstallationen erforderlich sind, kann beim Erfindungsgegenstand die Versuchseinrichtung durch Hinzufügen weiterer Sätze von mit entsprechenden Aggregaten und/oder Messgeräten und/oder Stellgliedern und/oder Anzeigeinstrumenten bestückten Tragplatinen stufenweise ausgebaut werden, etwa synchron mit dem zu bewältigenden Lehrstoff. So kann z.B. ein eine Grundausrüstung bildender Satz zur Durchführung einer folgende Versuche im Normalkühlbereich, im Klimabereich und Tiefkühlbereich enthaltenden Versuchsreihe vorgesehen sein:

Einfacher Kältekreislauf mit Kapillarrohreinspritzung – statisch belüfteter Verdampfer – Normalkühlbereich – Klimabereich – zwangsbelüfteter Verdampfer – einfacher Kältekreislauf mit automatischem Regelventil – statischer und zwangsbelüfteter Verdampfer – luftgekühlter Verflüssiger – elektrische Steuerung mittels Verdampferthermostaten – Druckwächterfunktionen, variable Kältemittelmengen – einfacher Kältekreislauf mit thermostatischem Regelventil – erweiterte Kältekreisläufe – Abtauen von Verdampfern.

An diesen Grundlehrgang kann sich praktisch eine weitere Versuchsreihe mit folgenden Versuchen anschliessen:

Startregler – Verdampferdruckregler – Heissgasbypassregler – Verflüssigerkonstantdruckregelung – Nachspritzung in die Saugleitung – Vier-Wege-Umschaltventil – Wärmepumpe – Abwärmenutzung – Anwendung der entsprechenden elektrischen Schaltungen.

Mit einer derartigen Ausstattung können somit an Messmöglichkeiten und Auswertungen Demonstrations- und/oder Schulungsversuche für folgende Problemstellungen durchgeführt werden:

Verschiedene Kältemittelmassenströme – Stromaufnahme – Leistungsmessung – Druckabfall in Reglern in Kältemittel führenden Rohrleitungen – variable Wärmeströme am Verdampfer und Verflüssiger – Nutzkälteleistung – Wärmeäquivalent – Verdichterleistung und Verflüssigungsdruck – Arbeitsüberhitzung an thermostatischen Regelventilen – Über- bzw. Unterfüllung mit Kältemittel – Inneres Verhalten der Kälteanlage – Fehleranalyse bei der Montage und Inbetriebnahme – Einstellung sämtlicher Schalt- und Regelgeräte – Druck- und Temperaturmessungen – Anlaufprobleme von Verdichtermotoren und deren Beseitigung – Schäden an Verdichtern durch überhitztes Kältemittel.

Die erfindungsgemässen Massnahmen lassen in vorteilhafter Weise einen weiteren stufenweisen Ausbau zu. In vorteilhafter Ausgestaltung der übergeordneten Massnahmen können dabei die jeweils zumindest für eine Versuchsreihe benötigten Aggregate und/oder Messgeräte und/oder Stellglieder und/oder Anzeigeinstrumente auf jeweils einer gemeinsamen Halteplatte befestigt sein, die in einen der Rasterhohlräume des Tragrahmens hineinpasst. Dies ermöglicht in vorteilhafter Weise kurze Leitungsverbindungen und einen schnellen Auf- und Abbau.

In weiterer zweckmässiger Fortbildung kann ein Experimentiertisch vorgesehen sein, an dem der Tragrahmen festlegbar ist. Dabei kann der Tragrahmen gegenüber der Arbeitsplatte des Experimentiertisches vorzugsweise im Bereich einer ihrer Längskanten aufragend oder die Arbeitsplatte des Experimentiertisches vorzugsweise im Bereich einer ihrer Längskanten überragend am Experimentiertisch oder aber von der Arbeitsplatte des Experimentiertisches vorzugsweise im Bereich einer ihrer Längskanten hochragend an dieser Arbeitsplatte festlegbar sein. Durch diese Verbindung mit dem Experimentiertisch kann der Tragrahmen ohne weitere zusätzliche Hilfsmittel eine ausgezeichnete Standfestigkeit erhalten.

Der Tragrahmen kann aber seinerseits auch einzeln fussbodenfest festlegbar sein. Dies wird immer dann zu bevorzugen sein, wenn der Tragrahmen ortsveränderbar ausgebildet ist. Hierfür kann er zweckmässig festbremsbare Laufrollen aufweisen, mittels derer er verfahrbar ist. Eine solche Ausführung des Tragrahmens kann sich häufig dort empfehlen, wo es aus Platzgründen zu bevorzugen erscheint, ihn nach Durchführung der betreffenden Versuche in einem entsprechenden Vorratsraum unterzubringen. Gerade diese Art der Fortbringung des Tragrahmens und anderweitigen Aufbewahrung desselben ausserhalb des Demonstrationsraumes kann sich insbesondere dann empfehlen, wenn ein für einen bestimmten Versuch oder eine bestimmte Versuchsgruppe bestückter Tragrahmen in Kürze nochmals zur Demonstration bzw. Durchführung des bzw. der gleichen Versuch(e) Verwendung finden soll, wie das häufig in Berufsschulen bzw. Berufsfachschulen der Fall sein kann, wo parallel zueinander mehrere Klassen stundenplanmässig nacheinander mit dem gleichen Lehrstoff unterrichtet bzw. experimentell vertraut gemacht werden sollen.

Sowohl aus Gründen kostengünstiger und schneller Erstellung des Tragrahmens als auch im Interesse schneller und bequemer und dabei zugleich höchst zuverlässiger Festlegung der einzelnen mit den benötigten Aggregaten und/oder Messgeräten und/oder Anzeigeinstrumenten und/oder Stellgliedern besetzten Tragplatinen sieht eine weitere zweckmässige Fortbildung der Erfindung vor, dass der Tragrahmen zumindest als die Rasterhohlräume begrenzende horizontale Streben, die als Profilschienen ausgebildet sind, aufweist. Dabei können mit Vorzug die Profilschienen jeweils lösbar an einem tragenden Randrahmen festlegbar sein.

Eine weitere Vervollkommnung der Erfindung sieht einen Verdampfer vor, der in einem eigenen Verdampfergehäuse angeordnet ist, welches seinerseits gleichfalls mit Vorzug als Profilkonstruktion ausgebildet sein kann.

Als besonders zweckmässig, weil eine verhältnismässig leichte und damit gleichzeitig auch kostengünstige Ausführung der Profilkonstruktion gestattend hat es sich erwiesen, wenn gemäss einer weiteren erfinderischen Fortbildung der Tragrahmen und/oder der Verdampferrahmen jeweils als Raumgerüst ausgebildet sind, dessen rückwärtiges lichtes Gefach durch mindestens eine eine Rückwand bildende Feinspanplatte und/oder dessen nach oben weisendes lichtes Gefach durch mindestens eine eine Deckwand bildende Feinspanplatte und/oder dessen zumindest eines seitliches lichtes Gefach durch mindestens eine eine Seitenwand bildende Feinspanplatte ausgesteift ist. Dabei können ferner die Feinspanplatten als Schutz gegen Beschädigung und zur Verbesserung der Arbeitsbedingungen durch Herstellung glatter und leicht zu reinigender Oberflächen jeweils kunststoffbeschichtet sein. Schliesslich hat es sich auch als zweckmässig erwiesen, wenn zumindest die den Verdampferrahmen aussteifenden Feinspanplatten eine zusätzliche Kälteisolierung aufweisen.

Für den Verdampferrahmen sind nach der Erfindung unterschiedliche Festlegungsmöglichkeiten vorgesehen. Einerseits kann er zweckmässig am Tragrahmen festlegbar sein. Dies wird sich überwiegend dann empfehlen, wenn der Tragrahmen experimentiertischfrei zum Einsatz kommt, jedoch vermieden werden soll, dass Verdampferrahmen und Tragrahmen eigene voneinander getrennte Aufstellungsorte haben. Hinzu kommt, dass bei geeigneter konstruktiver Auslegung der Verdampferrahmen dann, wenn er am Tragrahmen festgelegt ist, zu dessen Steifigkeit und Standfestigkeit beizutragen vermag.

Bei einer Ausführung der Erfindung mit ortsveränderbarem Tragrahmen empfiehlt es sich nicht selten, dass der Verdampferrahmen festbremsbare Laufrollen aufweist und gemeinsam mit dem Tragrahmen verfahrbar ist. Insbesondere im bereits beschriebenen Einsatzfall der Notwendigkeit der Durchführung von gleichartigem Unterricht bzw. Laborbetrieb in unterschiedlichen Schüler- bzw. Studentenklassen lässt sich hierdurch speziell der Vorteil der Zwischenlagerung eines einsatzfertig ausgerüsteten Tragrahmens mit vom an ihm festgelegten Verdampferrahmen getragenem betriebsbereitem Verdampfer bis zur nächsten stundenplanmässigen Verwendung nutzen.

Für eine Ausführung mit einem Experimentiertisch hingegen kann ebenso zweckmässig der Verdampferrahmen am Experimentiertisch lösbar festlegbar sein. Für andere Fälle hat es sich wiederum als zu bevorzugen erwiesen, wenn der Verdampferrahmen auf einem fahrbaren und festbremsbaren Experimentier-Anstelltisch angeordnet ist.

In weiterer zweckmässigr Vervollkommnung der Erfindung kann ferner der Bausatz einen Verflüssigersatz aus Verdichter, Verflüssiger, Kältemittelsammler und Regelventilen aufweisen, der auf einem eigenen Grundrahmen angeordnet ist. Dieser Grundrahmen kann mit Vorzug tragbar sein. Auch für die Anordnung dieses Grundrahmens und damit des von ihm abgestützten Verflüssigersatzes sieht die Erfindung unterschiedliche Möglichkeiten vor. So kann der Grundrahmen am Tragrahmen festlegbar sein, und, falls dieser ortsveränderbar ist, festbremsbare Laufrollen aufweisen und gemeinsam mit dem Tragrahmen verfahrbar sein. Liegt hingegen eine Ausführung der Erfindung mit einem Experimentiertisch vor, so ist es häufig zu bevorzugen, dass der Grundrahmen am Experimentiertisch lösbar festlegbar ist.

Zur Erleichterung des Aufbaues eines für ein bestimmtes Versuchsprogramm einsatzbereiten Experimentierplatzes sieht die Erfindung in weiterer zweckmässiger Fortbildung vor, dass die Tragplatinen mittels Schnellverschlüssen an den Rahmenprofilen des Tragrahmens lösbar festlegbar sind. Zur Gewährleistung einer besonders sicheren und zuverlässigen Befestigung der Tragplatinen am Tragrahmen können dabei die Schnellverschlüsse mit Vorzug als Druckverschlüsse ausgebildet sein.

Aus den gleichen Gründen der Steigerung der Universalität der Einzelteile des Bausatzes nach der Erfindung im Hinblick auf Verwendung für unterschiedlichste Versuchsaufgaben und zur Rationalisierung der Erstellung eines beliebig konzipierten Versuchsaufbaus aus diesen Einzelteilen des erfindungsgemässen Bausatzes bei gleichzeitiger Gewährleistung extremer Sicherheit und Zuverlässigkeit der Anschlussverbindungen sieht die Erfindung gemäss einem weiteren untergeordneten Erfindungsgedanken vor, dass die kältemittelbeständigen Verbindungsleitungen und die von den Tragplatinen getragenen Aggregate und/oder Messgeräte und/oder Stellglieder und/oder Anzeigeinstrumente eines Kältemittelkreislaufes jeweils Schnellkupplungen aufweisen, mittels derer sie miteinander verbindbar sind.

Aus den gleichen Gründen wird es bevorzugt, wenn die elektrischen Verbindungskabel und die von den Tragplatinen getragenen Aggregate und/oder Messgeräte und/oder Stellglieder und/oder Anzeigeinstrumente elektrischer Kreisläufe jeweils elektrische Sicherheitsschnellverbindungen aufweisen, mittels derer sie miteinander verbindbar sind. Dabei hat es sich als zu bevorzugen herausgestellt, wenn die Sicherheitsschnellverbindungen jeweils 4-mm-Stecker aufweisen.

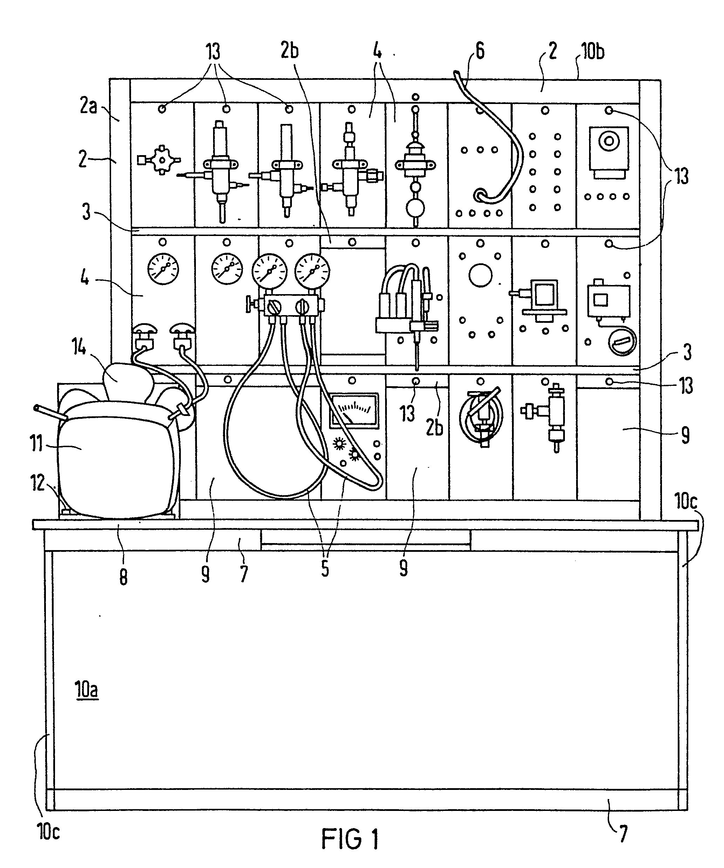

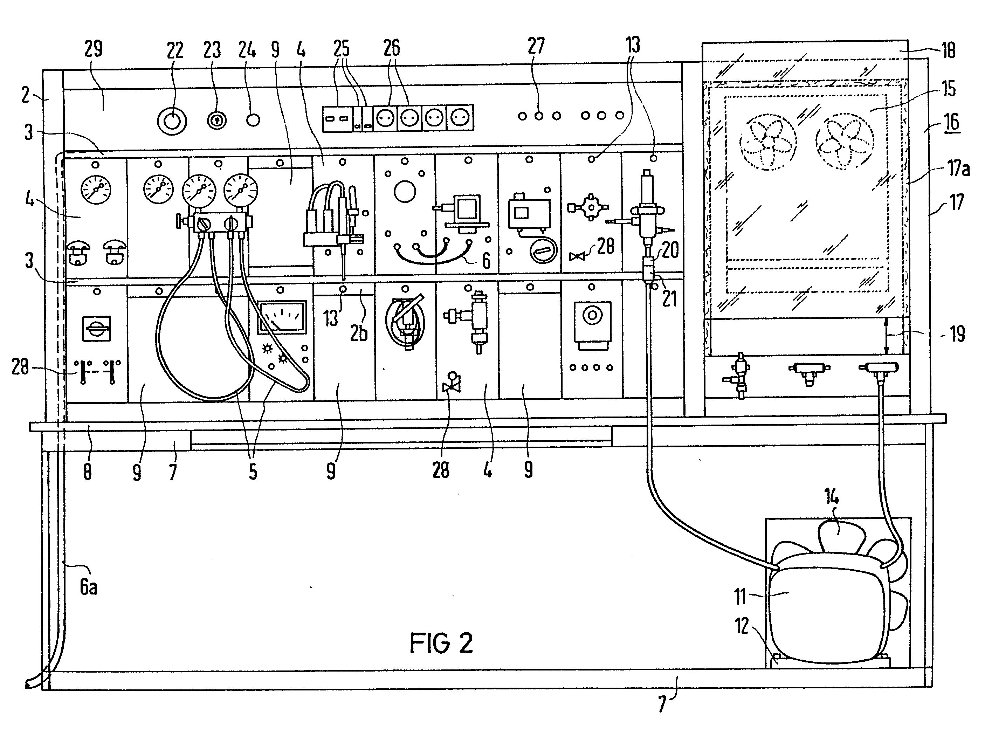

Im folgenden wird die Erfindung anhand zweier Ausführungsbeispiele, welche in den Fig. 1 und 2 der Zeichnung als Vorderansicht eines mit einem Bausatz nach der Erfindung erstellten Experimentierplatzes dargestellt sind, näher erläutert.

Der in Fig. 1 als Raumgerüst aus beispielsweise Stahl- oder Aluminium-Profilen erstellte Experimentiertisch ist mit 7 bezeichnet. Sein rückwärtiges lichtes Gefach ist mit einer Feinspanplatte 10a und seine beiden seitlichen lichten Gefache sind jeweils mit einer Feinspanplatte 10c ausgesteift, wobei diese Feinspanplatten jeweils kunststoffbeschichtet sind. Abgedeckt ist der Experimentiertisch 7 durch die Arbeitsplatte 8.

An der Arbeitsplatte 8 längs deren hinteren Längskante ist der als Ganzes mit 2 bezeichnete Tragrahmen festgelegt, der aus einem tragenden Randrahmen 2a aus gleichfalls Stahl- oder Aluminium-Profilen und als Profilschienen ausgebildete horizontale Streben 3 gebildet ist. Zwischen jeweils einer solchen horizontalen Strebe 3 und dem benachbarten Teil des Randrahmens 2a oder der benachbarten horizontalen Strebe 3 sind horizontale Rasterhohlräume 9 gebildet, von denen in der Zeichnung einige dargestellt sind, und zwar einer im mittleren Bereich zwischen den beiden horizontalen Streben 3 (nicht mit Bezugsziffer bezeichnet) und mehrere im unteren Bereich des Tragrahmens 2 zwischen dessen unterer horizontaler Strebe 3 und unterem Randrahmenteil 2a. In diesen nicht mit Tragplatinen 4 besetzten und daher sichtbaren Rasterhohlräumen 9 sind jeweils die Schenkel 2b der als Profilschienen ausgebildeten Streben 3 erkennbar.

In die Rasterhohlräume 9 sind, wie dargestellt, eine Anzahl Tragplatinen 4 vorzugsweise aus Kunststoff-Plattenmaterial eingefügt und jeweils mittels als Druckverschlüsse ausgebildeter Schnellverschlüsse 13 am Tragrahmen 2 an dessen horizontalen Schenkel 2b der Profilschienen schnell und bequem lösbar und dabei doch zuverlässig gesichert festgelegt. Es ist erkennbar, dass diese Tragplatinen 4 mit unterschiedlichen Bauelementen wie Messgeräten, Anzeigeinstrumenten, Stellgliedern, Aggregaten usw. bereits beschriebener Art besetzt sind, welche auf sie frontseitig aufgebaut sind und, sofern nicht zu Zwecken der Demonstration der Leitungsverbindung selbst erforderlich, von der Vorder- oder Rückseite her sowohl kältemittelführend als auch elektrisch miteinander verbunden sind. Zur Verdeutlichung der Erfindung sind rein beispielsweise in der Zeichnung zwei hochflexible kältemittelbeständige Schlauchleitungen 5 von einem Mehrwege-Umschaltventil mit aufgesetzten Messgeräten herabhängend dargestellt. Gleichermassen ist in der oberen Reihe eine elektrische Verbindungsleitung 6 dargestellt, welche von einer tragplatinenfesten Steckdose kommen und zu einer entfernteren elektrischen Energiequelle führen mag.

Im linken Bereich der Arbeitsplatte 8 des Experimentiertisches 7 ist ein Verflüssigersatz 11 mit Ventilator 14 schematisch angedeutet, der von einem auf dem Experimentiertisch 7 festgelegten Grundrahmen 12 getragen wird.

Es ist ersichtlich, dass die Erfindung nicht auf das dargestellte Ausführungsbeispiel beschränkt ist, vielmehr dem Fachmann vielfältige Möglichkeiten offen stehen, sie an die jeweiligen konstruktiven und materialmässigen Gegebenheiten und/oder die Forderungen des jeweiligen Einsatzfalles anzupassen, ohne dadurch den Rahmen der Erfindung zu verlassen. Dabei ist besonders auf die nicht näher dargestellten weiteren bevorzugten Ausführungsformen der Erfindung zu verweisen, bei denen der Bausatz für die Erstellung eines Experimentierplatzes ohne Experimentiertisch konzipiert ist und daher der Tragrahmen so ausgelegt und ausgebildet ist, dass er zum Beispiel auf dem Fussboden stehen und/oder an diesem festgelegt werden kann oder aber verfahrbar ausgebildet ist, wobei dann mit Vorzug die Zusatzaggregate, wie Verdampfer und/oder Verflüssiger, nicht nur auf entsprechendem Verdampferrahmen bzw. Verflüssiger-Grundrahmen angeordnet sind, sondern diese Rahmen zweckmässig auch am Tragrahmen für die Experimentierplatinen festlegbar und für den Fall, dass der Tragrahmen verfahrbar sein sollte, in entsprechender Weise gleichfalls und gemeinsam mit dem Tragrahmen verfahrbar ausgestaltet sein sollten. Nähere Einzelheiten hierfür brauchen weder dargestellt noch detaillierter erläutert zu werden, da sie dem Fachmann insoweit geläufig sind.

Bei der in Fig. 2 dargestellten Ausführung ist auf der Arbeitsplatte des Experimentiertisches 7 der Tragrahmen 2 und der in einem Gehäuse 16 angeordnete Verdampfer 15 angeordnet. Der Verflüssigersatz 11 mit seinem Grundrahmen 12 ist in einem Gefach des Experimentiertisches 7 untergebracht.

Im oberen Rasterhohlraum 9 des Tragrahmens 2 sind die elektrischen Bauelemente 22 bis 27 für die elektrische Stromversorgung angeordnet. Auf diese Weise wird die Stromversorgung besser gegen Flüssigkeiten, die beim Experimentieren austreten können, geschützt. Auf einer gemeinsamen Platte 29 sind ein Notaustaster 22, ein Schlüsselschalter 23 zur Freigabe der Stromversorgung des Experimentierplatzes, eine Meldeleuchte 24, ein Motorschutzschalter und Sicherungsautomat 25, Steckdosen 26 und Laboranschlussbuchsen 27 angeordnet.

Zur Erhöhung der Übersichtlichkeit und um den Auszubildenden mit den Normen bekannt zu machen, ist es zweckmässig, die Tragplatinen 4 auf der Frontseite mit mindestens einem durch eine Farbschicht, durch Ätzen, Prägen oder Gravieren gebildeten Symbol 28 des angeordneten Gerätes oder Bauelementes zu versehen.

Zur Erzielung praxisnaher Verhältnisse und um Messungen und Regelungen im Kälte- und Klimabereich zu ermöglichen, ist der Verdampfer 15 vorzugsweise in einem Gehäuse 16 angeordnet, dessen Seitenwände 17 und dessen Rückwand eine Kälteisolierung 17a aufweisen und dessen frontseitige Abdeckung 18 zur Einstellung einer gewünschten Öffnung 19 verstellbar ist. Im vorliegenden Fall ist die Abdeckung 18 in der Höhe verschiebbar, so dass ein mehr oder weniger grosser Spalt 19 für den Lufteintritt zur Verfügung steht.

Die Kältemittelein- und ausgänge der kältemittelbeständigen Schlauchleitungen 5 und der auf den Tragplatinen 4 aufgenommenen kälte- bzw. klimatechnischen Geräte und/oder Bauelemente sind jeweils mit aufeinanderpassenden Schnellkupplungselementen 20 versehen, die eine rasche Herstellung von Verbindungen zwischen den verschiedenen kältemitteltechnischen Bauteilen ermöglichen. Dabei ist es vorteilhaft, in die Enden der Schlauchleitungen 5 Ventile 21 einzubauen, um einen Auslauf des Kältemittels bei Umbauten zu vermeiden. Auf diese Weise wird ein sehr sauberes und ungefährliches Arbeiten ermöglicht.

Bezugszeichenliste

| | |
|---|---|
| 1 | Experimentiervorrichtung |
| 2 | Tragrahmen |
| 2a | Randrahmen |
| 2b | Schenkel |
| 3 | Streben |
| 4 | Tragplatinen |
| 5 | Schlauchleitungen |
| 6 | Verbindungsleitung |
| 6a | Anschlusskabel |
| 7 | Experimentiertisch |
| 8 | Arbeitsplatte |
| 9 | Rasterhohlraum |
| 10a, b, c | Feinspanplatte |
| 11 | Verflüssigersatz |
| 12 | Grundrahmen |
| 13 | Schnellverschlüsse |
| 14 | Ventilator |
| 15 | Verdampfer |
| 16 | Gehäuse |
| 17 | Seitenwände |
| 17a | Kälteisolierung |
| 18 | Frontseitige Abdeckung |
| 19 | Öffnung |
| 20 | Schnellkupplungselemente |
| 21 | Ventile |
| 22–27 | elektrische Bauelemente |
| 28 | Symbol |

**Patentansprüche**

1. Experimentiervorrichtung zur Durchführung von kälte- und/oder klimatechnischen Versuchen, bei der ein mit Platten versehener Tragrahmen mit durch mindestens eine horizontale Strebe gebildeten horizontalen Rasterhohlräumen vorgesehen ist und in mindestens einen der Rasterhohlräume an Tragplatinen angeordnete kälte- bzw. klimatechnische Geräte und/oder Bauelemente einsetzbar sind, und zum Versorgen und Verbinden der vorgesehenen Geräte und Bauelemente elektrische Verbindungskabel und Verbindungsleitungen für ein flüssiges Medium dienen, dadurch gekennzeichnet, dass bei Ausbildung der Experimentiervorrichtung zur Demonstration von Versuchen die Tragplatinen (4) am Tragrahmen (2) oder an der Strebe (3) mittels Schnellverschlüssen, insbesondere Druckverschlüssen, lösbar festlegbar sind, dass an den Tragplatinen (4) mindestens ein kälte- bzw. klimatechnisches Gerät und/oder Bauelement frontseitig angeordnet ist, dass als Verbindungsleitungen für das flüssige Medium flexible, kältemittelbeständige und/oder wärmeisolierte Schlauchleitungen (5) dienen, dass die Kältemittel Ein- und Ausgänge der kältemittelbeständigen Schlauchleitungen (5) und der auf der Tragplatine (4) aufgenommenen kälte- bzw. klimatechnischen Geräte und/oder Bauelemente jeweils mit aufeinander passenden Schnellkupplungselementen (20) versehen sind, dass in den Enden der Schlauchleitungen (5) Ventile (21) eingebaut sind, dass Schlauchleitungen (5) und Verbindungskabel (6) auf der Vorderseite der Experimentiervorrichtung angeordnet sind und der Tragrahmen (2) durch die Platten (10a, 10b, 10c) verkleidet ist.

2. Experimentiervorrichtung nach Anspruch 1, dadurch gekennzeichnet, dass sie einen Experimentiertisch (7) aufweist, an dem der Tragrahmen (2), insbesondere im Bereich einer Längskante der Arbeitsplatte (8) des Experimentiertisches (7), festlegbar ist.

3. Experimentiervorrichtung nach Anspruch 1 oder 2, dadurch gekennzeichnet, dass der Tragrahmen (2), insbesondere durch festbremsbare Laufrollen, ortsveränderbar ausgebildet ist.

4. Experimentiervorrichtung nach einem der vorhergehenden Ansprüche mit einem Verdampfer, dadurch gekennzeichnet, dass der Verdampfer (15) in einem Gehäuse (16) angeordnet ist, dessen Seitenwände (17) und Rückwand eine Kälteisolierung (17a) aufweisen und dessen frontseitige Abdeckung (18) zur Einstellung einer gewünschten Öffnung (19) verstellbar ist.

5. Experimentiervorrichtung nach einem der vorhergehenden Ansprüche, dadurch gekennzeichnet, dass sie einen Verflüssigersatz (11) aus Verdichter, Verflüssiger, Kältemittelsammler und Regelventilen aufweist, der auf einem eigenen tragbaren und/oder verfahrbaren und/oder am Tragrahmen (2) bzw. Experimentiertisch (7) festlegbaren Grundrahmen (12) angeordnet ist.

6. Experimentiervorrichtung nach einem der vorhergehenden Ansprüche, dadurch gekennzeichnet, dass im oberen Rasterhohlraum (9) die elektrischen Bauelemente (22 bis 27) für die elektrische Stromversorgung angeordnet sind.

7. Experimentiervorrichtung nach Anspruch 1, dadurch gekennzeichnet, dass die Tragplatine (4) auf der Frontseite mit mindestens einem durch eine Farbschicht, durch Ätzen, Prägen oder Gravieren gebildeten Symbol (28) des angeordneten Gerätes oder Bauelementes versehen ist.

**Claims**

1. An experimenting device for carrying out refrigeration and/or air-conditioning experiments, wherein there is provided a supporting frame provided with plates and having horizontal cavities forming a grid which are formed by at least one horizontal strut, wherein refrigeration or air-conditioning apparatus, as the case may be, and/or components, arranged on carrier plates, can be inserted into a least one of the grid cavities, and wherein electrical connection cables and connecting pipes for a liquid medium serve for the supply and connection of the apparatus and components provided, characterised in that on arranging the experimenting device to demonstrate experiments, the supporting plates (4) can be detachably fixed on the supporting frame (2), or on the strut (3); that at least one refrigeration or air-conditioning apparatus, as the case may be, and/or component is arranged at the front on the supporting plates (4); the flexible coolant-resistant and/or heat-insulated hoses (5) serve as connecting pipes for the liquid medium; that the coolant inputs and outputs of the coolant-resistant hoses (5) and of the refrigeration or air-conditioning apparatus, as the case may be, and/or components, which are accommodated on the supporting plate (4), are in each case provided with quick-action coupling elements (20) which fit on one another; that valves (21) are inserted in the ends of the hoses (5); that hoses (5) and connecting cables (6) are arranged on the front face of the experimenting device and the supporting frame (2) is clad with plates (10a, 10b, 10c).

2. An experimenting device as claimed in Claim 1, characterised in that it comprises an experimenting table (7), on which the supporting frame (2) can be fixed, particularly but not exclusively in the region of a longitudinal edge of the working top (8) of the experimenting table (7).

3. An experimenting device as claimed in Claim 1 or Claim 2, characterised in that the supporting frame (2) is designed to be movable, particularly, but not exclusively by rollers which can be braked.

4. An experimenting device as claimed in one of the preceding Claims comprising an evaporator, characterised in that the evaporator (15) is arranged in a housing (16), the side walls (17) and rear wall of which have a thermal insulation (17a) and the front cover (18) of which is adjustable to set a required opening (19).

5. An experimenting device as claimed in one of the preceding Claims, characterised in that it comprises a liquifier set (11) which consists of a compressor, a condenser, a coolant collector and control valves and which is arranged on a separate base frame (12) which is supportable and/or movable and/or can be fixed on the supporting frame (2) or the experimenting frame (7).

6. An experimenting device as claimed in one of the preceding Claims, characterised in that the electrical components (22 to 27) for electric current supply are arranged in the upper grid cavity (9).

7. An experimenting device as claimed in Claim 1, characterised in that at the front, the supporting plate (4) is provided with at least one symbol (28) of the apparatus or component provided, which symbol is formed by a layer of colour, by etching, by embossing, or by engraving.

**Revendications**

1. Dispositif d'expérimentation pour l'exécution d'essais dans le domaine technique du froid et/ou de la climatisation et dans lequel il est prévu un cadre de support muni d'une plaque et comportant des cavités horizontales d'insertion, formés par au moins une traverse horizontale, et dans lequel des appareils et/ou des composants du domaine technique du froid ou de la climatisation, disposés sur des platines de support, peuvent être insérés dans au moins l'une des cavités d'insertion, et dans lequel des câbles de liaison électriques et des conduites de liaison pour un milieu liquide sont utilisés pour alimenter et relier les appareils et composants prévus, caractérisé par le fait que, dans le cas de l'agencement du dispositif d'expérimentation pour la présentation d'essais, les platines de support (4) peuvent être fixées d'une manière détachable sur le cadre de support (2) ou sur la traverse (3) au moyen de dispositifs de fermeture rapide et notamment du dispositif de fermeture à pression, qu'au moins un appareil et/ou un composant du domaine technique du froid ou de la climatisation est disposé, au niveau de la face avant, sur les platines de support (4), qu'on utilise, comme conduites de liaison pour le milieu liquide, des tuyaux flexibles (5) résistant au fluide de refroidissement et/ou thermiquement isolé, que les entrées et les sorties du fluide de refroidissement des tuyaux (5) résistant au fluide de refroidissement et des appareils et/ou composants du domaine technique du froid ou de la climatisation, installés sur la platine de support (4), sont équipés respectivement d'organe d'accouplement rapides (20) s'adaptant les uns aux autres, que des vannes (21) sont montées dans les extrémités des tuyaux (5), que des tuyaux (5) et des câbles de liaison (6) sont disposés sur la face avant du dispositif d'expérimentation et que le cadre de support (2) est habillé par les plaques (10a, 10b, 10c).

2. Dispositif d'expérimentation suivant la revendication 1, caractérisé par le fait qu'il comporte une table d'expérimentation (7) sur laquelle le cadre de support (2) peut être fixé, notamment dans la zone d'un bord longitudinal de la plaque de travail (8) de la table d'expérimentation (7).

3. Dispositif d'expérimentation suivant la revendication 1 ou 2, caractérisé par le fait que le cadre de support (2) est réalisé de manière à être mobile, notamment grâce à la présence de galets de roulement pouvant être bloqués par freinage.

4. Dispositif d'expérimentation suivant l'une des revendications précédentes, comportant un évaporateur, caractérisé par le fait que l'évaporateur (15) est disposé dans un carter (16) dont les parois latérales (17) de la paroi arrière comportent un élément d'isolation au froid (17a) et dont le revêtement (18) de la face avant est réglable de manière à permettre le réglage d'une ouverture désirée (19).

5. Dispositif d'expérimentation suivant l'une des revendications précédentes, caractérisé par le fait qu'il comporte un ensemble de condensation (11) constitué par un compresseur, un condenseur, un collecteur de fluides de refroidissement et des vannes de régulation et qui est monté sur un châssis de base particulier (12) portable et/ou déplaçable et/ou pouvant être fixé sur le cadre de support (2) ou sur la table d'expérimentation (7).

6. Dispositif d'expérimentation suivant l'une des revendications précédentes, caractérisé par le fait que les composants électriques (22 à 27) pour l'alimentation en courant électrique sont disposés dans la cavité supérieure d'insertion (9).

7. Dispositif d'expérimentation suivant la revendication 1, caractérisé par le fait que la platine de support (4) est équipée, sur la face avant, d'au moins un symbole (28), formé par une couche colorée, par corrosion, par gaufrage ou par gravure, de l'appareil ou du composant mis en place.

FIG 1

FIG 2